(19) Europäisches Patentamt / European Patent Office / Office européen des brevets

(11) **EP 4 383 587 A1**

(12) **EUROPEAN PATENT APPLICATION**
published in accordance with Art. 153(4) EPC

(43) Date of publication:
**12.06.2024 Bulletin 2024/24**

(21) Application number: **21953837.8**

(22) Date of filing: **20.08.2021**

(51) International Patent Classification (IPC):
**H04B 7/06** (2006.01)     **H04W 28/06** (2009.01)
**H04W 24/02** (2009.01)

(52) Cooperative Patent Classification (CPC):
**H04B 7/06; H04W 24/02; H04W 28/06**

(86) International application number:
**PCT/CN2021/113906**

(87) International publication number:
**WO 2023/019596 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **ZHENG, Feng
  Beijing 100085 (CN)**
• **DUAN, Gaoming
  Beijing 100085 (CN)**
• **CHI, Liangang
  Beijing 100085 (CN)**

(74) Representative: **Kudlek, Franz Thomas
Dehns Germany
Theresienstraße 6-8
80333 München (DE)**

(54) **ORBITAL ANGULAR MOMENTUM (OAM)-BASED COMMUNICATION METHOD AND APPARATUS**

(57) Embodiments of the present application disclose an orbital angular momentum (OAM)-based communication method and apparatus, which may be applied to the Internet of Vehicles, such as vehicle to everything communication, long term evolution-vehicle, and vehicle to vehicle communication, or may be used in the fields of intelligent driving, intelligent connected vehicles, and the like, or may also be used in the fields of AR/VR, Internet of Things, and the like. The method comprises: a receiving end sends instruction information, the instruction information being used for instructing a sending end to determine a sending mode. By implementing the embodiments of the present application, the system capacity can be maximized, the applicable scenarios can be expanded, and the gain can be improved.

transmitting indication information to indicate a transmitting end to determine a transmitting mode — 301

FIG. 3

## Description

### TECHNICAL FIELD

The present disclosure relates to the field of communication technology, and particularly to a communication method and device based on orbital angular momentum (OAM).

### BACKGROUND

With the continuous development of wireless communications, the requirements placed on communication capabilities is also increasing. For future applications such as augmented reality (AR)/virtual reality (VR), internet of vehicles, internet of things, etc., communications with ultra-high speed, ultra-low delay, or ultra-large bandwidth will become normal. However, resources available for modulating information in time, frequency, space, etc., have been widely used. Therefore, in addition to developing higher frequency bands, it is imperative to seek communication techniques with higher frequency spectral efficiency. In 1992, Allen, et al. first proposed that electromagnetic wave orbital angular momentum (abbreviation: OAM) may carry information. The OAM is considered to be a new modulation dimension independent of traditional modulation dimensions such as time, phase, frequency and polarization. In theory, OAM modes carried by vortex electromagnetic waves have an infinite number, and OAM beams with different integer eigenvalues are orthogonal to each other, which may improve the frequency spectral utilization indefinitely in theory.

In OAM communication systems, the most common transceiving system is an OAM communication system based on a uniform circular array (UCA). However, this system requires axes of transceiving antennas to be aligned. In case there is a deflection angle between axes of transceivers, the receiver will generate mode crosstalk, resulting in increased bit error rate and reduced system performance. Many non-ideal alignment conditions exist in wireless communications, especially in mobile communications. This is the key problem for application of vortex electromagnetic waves in mobile communications.

Inter-mode interference caused by misalignment will significantly reduce the reception and demodulation performances of vortex electromagnetic waves. In a case of the misalignment, if beam controlled compensation measures are not adopted, the inter-mode interference is mainly caused by adjacent modes. In the related art, it is usually to perform communications using even modes to reduce interference and improve a signal to interference plus noise ratio (SINR). However, this communication mode is only suitable for a scenario with a small deviation angle, and the gain is small. If beam control is used, main modes of the inter-mode interference will vary with the change of the deflection angle.

## SUMMARY

Embodiments of the present disclosure provide a communication method and device based on orbital angular momentum (OAM), which may be applied to internet of vehicles, such as a vehicle to everything (V2X) communication, a long term evolution-vehicle (LTE-V) communication, a vehicle to vehicle (V2V) communication and the like, or may be applied to fields of intelligent driving, intelligent connected vehicles and the like, or may also be applied to fields of AR/VR, Internet of things and the like. The communication is carried out based on a selected modal combination solution, so that a system capacity is maximized, applicable scenes are expanded, and a gain is improved.

In a first aspect, embodiments of the present disclosure provide a communication method based on orbital angular momentum (OAM). The method is performed by a receiving end, and includes: transmitting indication information to indicate a transmitting end to determine a transmitting mode.

In this technical solution, the receiving end may transmit the indication information to the transmitting end to indicate the transmitting end to determine an OAM mode combination for communication, so that the system capacity is maximized, the applicable scenes are expanded, and the gain is improved.

In an implementation, transmitting the indication information to indicate the transmitting end to determine the transmitting mode includes: determining a target OAM mode combination from preset K+1 OAM mode combinations, where K is a positive integer, K < N/2, and N represents a number of array elements emitting a uniform circular array (UCA); and transmitting the indication information to indicate to determine the transmitting mode of the transmitting end based on the target OAM mode combination.

In this technical solution, the target OAM mode combination may be selected from a plurality of OAM mode combinations, so that the transmitting end performs the communication based on the selected mode combination, so that the system capacity is maximized, the applicable scenes are expanded, and the gain is improved.

In an implementation, determining the target OAM mode combination from the preset K + 1 OAM mode combinations includes: determining channel information about a wireless channel between the receiving end and the transmitting end; and determining the target OAM mode combination from the preset K+1 OAM mode combinations based on the channel information.

In a possible implementation, determining the target OAM mode combination from the preset K+1 OAM mode combinations based on the channel information includes: determining the target OAM mode combination from the preset K+1 OAM mode combinations based on the channel information, and a preset mapping relationship between channel information and mode combinations.

In an implementation, the mapping relationship between channel information and mode combinations is configured based on a purpose for maximizing a channel capacity or maximizing a channel signal to interference plus noise ratio (SINR).

In this technical solution, an appropriate OAM mode combination may be selected from a plurality of OAM mode combinations by using the channel information, so that the system capacity may be maximized with the same transmission power.

In an implementation, determining the target OAM mode combination from the preset K+1 OAM mode combinations includes: determining a first deflection angle between the receiving end and the transmitting end; and determining the target OAM mode combination from the preset K+1 OAM mode combinations based on the first deflection angle, where K is the positive integer, K < N/2, and N represents the number of array elements emitting the UCA.

In this technical solution, an appropriate OAM mode combination may be selected from a plurality of OAM mode combinations based on the deflection angle between the receiving end and the transmitting end, so that the system capacity may be maximized with the same transmission power.

In an implementation, determining the target OAM mode combination from the preset K+1 OAM mode combinations based on the first deflection angle includes: determining the target OAM mode combination from the preset K+1 OAM mode combinations based on the first deflection angle, and a preset mapping relationship between deflection angles and mode combinations.

In an implementation, the mapping relationship between deflection angles and mode combinations is configured based on a purpose for maximizing a channel capacity or maximizing a channel SINR.

In a possible implementation, a formula of a first mode combination among the K+1 OAM mode combinations is represented as:

$$L = L' - \lfloor L'/(N/2) \rfloor * N$$, where L' = 0,1, ..., N - 1; and

a formula of a $k^{th}$ mode combination among the K+1 OAM mode combinations is represented as:

$$L = L' - \lfloor L'/(N/2) \rfloor * N$$, where L' = l + 2k * n + S;

l = 0/ .../2k - 1; n = 0,1,2 ..., $\left\lfloor \frac{N-1}{2k} \right\rfloor$ ; S = 0,1 ... k - 1; k = 1,2,3, ..., K;

where L represents a mode value of the mode combination, $L \in \left[ -\frac{N}{2}, \frac{N}{2} \right)$, L' represents a transition value for calculating the mode value L, n and S are related to a number of L' modes, l E [0, N), l represents an initial mode for OAM selection, and N represents the number of array elements emitting the UCA.

In an implementation, transmitting the indication information to indicate to determine the transmitting mode of the transmitting end based on the target OAM mode combination includes: obtaining a target index number corresponding to the target OAM mode combination based on a preset correspondence between index numbers and mode combinations; and transmitting first indication information to indicate to determine the transmitting mode of the transmitting end based on the target index number.

In a possible implementation, a plurality of target OAM mode combinations exist, and obtaining the target index number corresponding to the target OAM mode combination based on the preset correspondence between index numbers and mode combinations includes: obtaining target index numbers respectively corresponding to the plurality of target OAM mode combinations based on the correspondence between index numbers and mode combinations.

In an implementation, transmitting the indication information to indicate the transmitting end to determine the transmitting mode includes: determining channel information about a wireless channel between the receiving end and the transmitting end; and transmitting second indication information to indicate the transmitting end to determine the transmitting mode based on the channel information.

In an implementation, transmitting the indication information to indicate the transmitting end to determine the transmitting mode includes: determining a first deflection angle between the receiving end and the transmitting end; and transmitting third indication information to indicate the transmitting end to determine the transmitting mode based on the first deflection angle.

In a second aspect, embodiments of the present disclosure provide another communication method based on orbital angular momentum (OAM). The method is performed by a transmitting end, and includes: receiving indication information; and determining a transmitting mode of the transmitting end based on the indication information.

In this technical solution, different mode combination solutions may be selected according to channel state information (CSI) about a wireless channel and a signal reception quality, so that the transmitting end performs the communication based on the selected mode combination solution, so that the system capacity is maximized, the applicable scenes are expanded, and the gain is improved.

In an implementation, the indication information includes a target index number, and determining the transmitting mode of the transmitting end based on the indication information includes: determining a target OAM mode combination corresponding to the target index number from preset K+1 OAM mode combinations based on the indication information and a preset correspondence between index numbers and mode combinations, where K is a positive integer, K < N/2, and N represents a number of array elements emitting a uniform circular array (UCA); and determining the target OAM mode combination corresponding to the target index number as the transmitting mode of the transmitting end.

In another implementation, the indication information includes a plurality of target index numbers, and determining the transmitting mode of the transmitting end based on the indication information includes: determining a plurality of target OAM mode combinations corresponding to the plurality of target index numbers from preset K+1 OAM mode combinations based on the indication information and a preset correspondence between index numbers and mode combinations, where K is a positive integer, K < N/2, and N represents a number of array elements emitting a UCA; and selecting an intersection mode of the plurality of target OAM mode combinations as the transmitting mode of the transmitting end.

In an implementation, the indication information includes channel information, and determining the transmitting mode of the transmitting end based on the indication information includes: determining a target OAM mode combination based on the channel information; and determining the transmitting mode of the transmitting end based on the target OAM mode combination.

In a possible implementation, determining the target OAM mode combination based on the channel information includes: determining the target OAM mode combination from preset K+1 OAM mode combinations based on the channel information, where K is a positive integer, K < N/2, and N represents a number of array elements emitting a uniform circular array (UCA).

In a possible implementation, determining the target OAM mode combination from the preset K+1 OAM mode combinations based on the channel information includes: determining the target OAM mode combination from the preset K+1 OAM mode combinations based on the channel information, and a preset mapping relationship between channel information and mode combinations.

In an implementation, the mapping relationship between channel information and mode combinations is configured based on a purpose for maximizing a channel capacity or maximizing a channel signal to interference plus noise ratio (SINR).

In an implementation, the indication information includes a first deflection angle between a receiving end and the transmitting end, and determining the transmitting mode of the transmitting end based on the indication information includes: determining a target OAM mode combination from preset K+1 OAM mode combinations based on the first deflection angle, where K is a positive integer, K < N/2, and N represents a number of array elements emitting a uniform circular array (UCA).

In a possible implementation, determining the target OAM mode combination from the preset K+1 OAM mode combinations based on the first deflection angle includes: determining the target OAM mode combination from the preset K+1 OAM mode combinations based on the first deflection angle, and a preset mapping relationship between deflection angles and mode combinations.

In an implementation, the mapping relationship between deflection angles and mode combinations is configured based on a purpose for maximizing a channel capacity or maximizing a channel SINR.

In an implementation, a formula of a first mode combination among the K+1 OAM mode combinations is represented as:

$$L = L' - \lfloor L'/(N/2) \rfloor * N$$, where L' = 0,1, ..., N - 1; and

a formula of a $k^{th}$ mode combination among the K+1 OAM mode combinations is represented as:

$$L = L' - \lfloor L'/(N/2) \rfloor * N$$, where L' = I + 2k * n + S;

I = 0/ .../2k - 1; n = 0,1,2 ..., $\lfloor \frac{N-1}{2k} \rfloor$; S = 0,1 ... k - 1; k = 1,2,3, ..., K where L represents a mode value of the mode combination,

$$L \in \left[ -\frac{N}{2}, \frac{N}{2} \right)$$, L' represents a transition value for calculating the mode value L, n and S are related to a number of L' modes, I ∈ [0, N), I represents an initial mode for OAM selection, and N represents the number of array elements emitting the UCA.

In a third aspect, embodiments of the present disclosure provide a communication device having some or all of the functions of the receiving end for implementing the method as described in the first aspect above. For example, the communication device may have functions as described in some or all the embodiments in the present disclosure, or may have functions for implementing any of embodiments of the present disclosure alone. The functions may be implemented by hardware or software executed on corresponding hardware. The hardware or software includes one or more units or modules corresponding to the functions described above.

In an implementation, the communication device may include a transceiving module and a processing module in structure. The processing module is configured to support the communication device to perform the corresponding functions of the method described above. The transceiving module is configured to support communications between the communication device and other devices. The communication device may further include a storage module for coupling with the transceiving module and the processing module, and storing computer programs and data necessary for the communication device.

For example, the processing module may be a processor, the transceiving module may be a transceiver or a communication interface, and the storage module may be a memory.

In a fourth aspect, embodiments of the present disclosure provide another communication device having some or all of the functions of the transmitting end for implementing the method as described in the second aspect above. For example, the communication device may have functions as described in some or all of the embodiments of the present disclosure, or may have functions for implementing any of embodiments of the present disclosure alone. The functions may be implemented by hardware or software executed on corresponding hardware. The hardware or software includes one or more units or modules corresponding to the functions described above.

In an implementation, the communication device may include a transceiving module and a processing module in structure. The processing module is configured to support the communication device to perform the corresponding functions of the method described above. The transceiving module is configured to support communications between the communication device and other devices. The communication device may further include a storage module for coupling with the transceiving module and the processing module, and storing computer programs and data necessary for the communication device.

For example, the processing module may be a processor, the transceiving module may be a transceiver or a communication interface, and the storage module may be a memory.

In a fifth aspect, embodiments of the present disclosure provide a communication device including a processor that, when invoking a computer program in a memory, performs the method as described in the first aspect above.

In a sixth aspect, embodiments of the present disclosure provide a communication device including the processor that, when invoking a computer program in a memory, performs the method as described in the second aspect above.

In a seventh aspect, embodiments of the present disclosure provide a communication device including a processor, and a memory having stored therein a computer program. The processor is configured to perform the computer program stored in the memory to enable the communication device to implement the method as described in the first aspect above.

In an eighth aspect, embodiments of the present disclosure provide a communication device including a processor, and a memory having stored therein a computer program. The processor is configured to perform the computer program stored in the memory to enable the communication device to implement the method as described in the second aspect above.

In a ninth aspect, embodiments of the present disclosure provide a communication device including a processor and an interface circuit. The interface circuit is configured to receive code instructions and transmitting the code instructions to the processor, and the processor is configured to run the code instructions to enable the communication device to implement the method as described in the first aspect above.

In a tenth aspect, embodiments of the present disclosure provide a communication device including a processor and an interface circuit. The interface circuit is configured to receive code instructions and transmitting the code instructions to the processor, and the processor is configured to run the code instructions to enable the communication device to implement the method as described in the second aspect above.

In an eleventh aspect, embodiments of the present disclosure provides a communication system, and the system includes the communication device of the third aspect and the communication device of the fourth aspect, or the system includes the communication device of the fifth aspect and the communication device of the sixth aspect, or the system includes the communication device of the seventh aspect and the communication device of the eighth aspect, or the system includes the communication device of the ninth aspect and the communication device of the tenth aspect.

In a twelfth aspect, embodiments of the present disclosure provide a computer readable storage medium having stored therein instructions for use by the terminal device above. The instructions, when executed, enable the terminal device to implement the method as described in the first aspect above.

In a thirteenth aspect, embodiments of the present disclosure provide a readable storage medium having stored therein indications for use by the network device above. The instructions, when executed, enable the network device to implement the method as described in the second aspect above.

In a fourteenth aspect, the present disclosure further provides a computer program product including a computer program that, when run on a computer, enables the computer to perform the method as described in the first aspect above.

In a fifteenth aspect, the present disclosure further provides a computer program product including a computer program that, when run on a computer, enables the computer to perform the method as described in the second aspect above.

In a sixteenth aspect, the present disclosure provides a computer program that, when run on a computer, enables the computer to perform the method as described in the first aspect above.

In a seventeenth aspect, the present disclosure provides a computer program that, when run on a computer, enables the computer to perform the method as described in the second aspect above.

## BRIEF DESCRIPTION OF THE DRAWINGS

In order to clearly illustrate technical solutions in embodiments of the present disclosure or in the background, drawings to be used in embodiments of the present disclosure or in the background will be described below.

FIG. 1 is a schematic diagram illustrating variation of an inter-mode interference between a receiving end and a transmitting end with a deflection angle;

FIG. 2 is a schematic architectural diagram illustrating a communication system according to embodiments of the present disclosure;

FIG. 3 is a schematic flowchart illustrating a communication method based on orbital angular momentum (OAM) according to embodiments of the present disclosure;

FIG. 4 is a schematic flowchart illustrating another communication method based on orbital angular momentum (OAM) according to embodiments of the present disclosure;

FIG. 5 is a schematic flowchart illustrating yet another communication method based on orbital angular momentum (OAM) according to embodiments of the present disclosure;

FIG. 6 is a schematic flowchart illustrating yet another communication method based on orbital angular momentum (OAM) according to embodiments of the present disclosure;

FIG. 7 is a schematic flowchart illustrating yet another communication method based on orbital angular momentum (OAM) according to embodiments of the present disclosure;

FIG. 8 is a schematic block diagram illustrating a communication device according to embodiments of the present disclosure;

FIG. 9 is a schematic block diagram illustrating another communication device according to embodiments of the present disclosure.

## DETAILED DESCRIPTION

Embodiments of the present disclosure will be described in detail below, examples of which are illustrated in the drawings. The same or similar elements and the elements having the same or similar functions are denoted by like reference numerals throughout the descriptions. Embodiments described herein with reference to drawings are explanatory, serve to explain the present disclosure, and should not be construed to limit embodiments of the present disclosure. In the description of the present disclosure, unless otherwise stated, a character "/" generally indicates that contextual objects are in an "or" relationship, for example, A/B may mean A or B. Herein, the term "and/or" describes an associated relationship of associated objects, and means that there may be three relationships. For example, the expression "A and/or B" may mean that A exists alone, A and B exist at the same time, and B exists alone.

With the continuous development of wireless communications, the requirements placed on communication capabilities is also increasing. For future applications such as AR/VR, internet of vehicles, internet of things, etc., communications with ultra-high speed, ultra-low delay, or ultra-large bandwidth will become normal. However, resources available for modulating information in time, frequency, space, etc., have been widely used. Therefore, in addition to developing higher frequency bands, it is imperative to seek communication techniques with higher frequency spectral efficiency. In 1992, Allen, et al. first proposed that electromagnetic wave orbital angular momentum (OAM) may carry information. The OAM is considered to be a new modulation dimension independent of traditional modulation dimensions such as time, phase, frequency and polarization. In theory, OAM modes carried by vortex electromagnetic waves have an infinite number, and OAM beams with different integer eigenvalues are orthogonal to each other, which may improve the frequency spectral utilization indefinitely in theory.

As one of the key alternative technologies of 6G, the OAM has been widely studied by many scholars. Initially, due to the existence of beam divergence angle, the OAM was extensively studied in optical communication. The Venice Lake experiment in 2011 demonstrated that the OAM can also be used to transmit information in radio frequency communication. At present, there are two ways to transmit information using the OAM: OAM shifter keying (OAM-SK) and OAM multiplexing (OAM-DM). The OAM communication has the characteristics: generation and demodulation methods are simple without the need for complex reception and demodulation algorithm; different OAM beams are orthogonal to each other, and there are infinite modes and ultra-high spectral efficiency in theory.

In OAM communication systems, the most common transceiving system is an OAM communication system based on a uniform circular array (UCA). However, this system requires axes of transceiving antennas to be aligned. In case there is a deflection angle between axes of transceivers, the receiver will generate mode crosstalk, resulting in increased bit error rate and reduced system performance. Many non-ideal alignment conditions exist in wireless communications, especially in mobile communications. This is the key problem for application of vortex electromagnetic waves in mobile communications.

Inter-mode interference caused by misalignment will significantly reduce the reception and demodulation performances of vortex electromagnetic waves. Off-axis and non-parallel situations in a smaller amplitude may be solved by beam matching, while for a larger deflection angle, inter-mode interference still exists. Moreover, the main interference mode will change with a deflection angle. For a typical scenario of the mobile communication, a large degree of off-axis deflection angle exists, and the terminal may rotate and move quickly. Therefore, the OAM communication in such a non-aligned situation becomes a technical bottleneck for the application of the OAM.

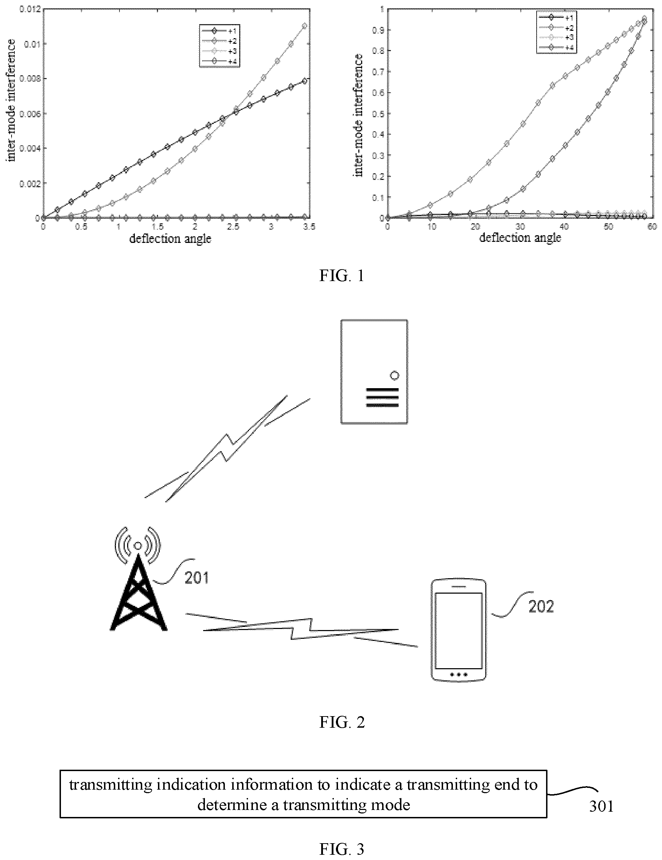

As the deflection angle changes, interference between different modes changes. As shown in FIG. 1, in a case where the deflection angle is small, the interference between adjacent modes is dominant, and in a case where the deflection angle becomes larger, the interference between modes $L\pm2$ and $L\pm4$ is dominant. In a case of the misalignment, if beam controlled compensation measures are not adopted, the inter-mode interference is mainly caused by adjacent modes. In the related art, it is usually to perform communications using even modes to reduce interference and improve a signal to interference plus noise ratio (SINR). However, this communication mode is only suitable for a scenario with a small deviation angle, and the gain is small. If beam control is used, main modes of the inter-mode interference will vary with the change of the deflection angle.

In view of this problem, the present disclosure proposes a communication method based on orbital angular momentum (OAM), which enables a transmitting end to select different mode combinations to transmit information as the deflection angle changes, so that the system capacity may be maximized with the same transmission power, applicable scenes may be expanded, and the gain may be improved.

In order to better understand the communication method based on the OAM disclosed in embodiments of the present disclosure, a communication system used in embodiments of the present disclosure is first described below.

Referring to FIG. 2, FIG. 2 is a schematic architectural diagram illustrating a communication system according to embodiments of the present disclosure. The communication system may include, but is not limited to, a receiving end and a transmitting end. The number and form of the devices shown in FIG. 1 are merely used as an example, and do not constitute a limitation on embodiments of the present disclosure. In practical applications, two or more receiving ends and two or more transmitting ends may be included. The communication system shown in FIG. 2 is illustrated as an example where one receiving end 201 and one transmitting end 202 are included.

It should be noted that the technical solutions of embodiments of the present disclosure may be applied to various communication systems, such as a long term evolution (LTE) system, a 5th generation (5G) mobile communication system, a 5G new radio (NR) system, or other new mobile communication systems in the future, etc.

The receiving end 201 in embodiments of the present disclosure may be a network device or a terminal device. The transmitting end 202 in embodiments of the present disclosure may be a terminal device or a network device. For example, in case the receiving end 201 is the network device, the transmitting end 202 may be the terminal device; alternatively, in case the receiving end 201 is the terminal device, the transmitting end 202 may be the network device.

The network device in embodiments of the present disclosure is an entity at a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. Embodiments of the present disclosure do not limit specific technology and specific device form used by the network device. The network device according to embodiments of the present disclosure may be composed of a central unit (CU) and distributed units (DUs), and the CU may also be referred to as a control unit. Using the CU-DU structure allows to split a protocol layer of the network device, such as a base station, a part of functions of the protocol layer is centrally controlled in the CU, some or all of the remaining functions of the protocol layer are distributed in the DUs, and the CU centrally controls the DUs.

The terminal device in embodiments of the present disclosure is an entity at a user side for receiving or transmitting signals, such as a mobile phone. The terminal device may also be referred to as a terminal, a user equipment (UE), a mobile station (MS), a mobile terminal (MT), etc. The terminal device may be a device with a communication function, such as an automobile, a smart automobile, a mobile phone, a wearable device, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. Embodiments of the present disclosure do not limit the specific technology and the specific device form used by the network device.

It may be understood that the communication system described in embodiments of the present disclosure is for a purpose of describing the technical solutions of embodiments of the present disclosure more clearly, and does not constitute a limitation on the technical solutions according to embodiments of the present disclosure. It may be understood by those skilled in the art that with the evolution of the system architecture and the emergence of new service scenarios, the technical solutions according to embodiments of the present disclosure are also applicable to similar technical problems.

The communication method and device based on the OAM provided in the present disclosure will be described in detail below with reference to the accompanying drawings.

Referring to FIG. 3, FIG. 3 is a schematic flowchart illustrating a communication method based on orbital angular momentum (OAM) according to embodiments of the present disclosure. It should be noted that the communication method based on the OAM according to embodiments of the present disclosure is performed by a receiving end. As shown in FIG. 3, the communication method based on the OAM may include, but is not limited to, a following step.

In step 301, indication information is transmitted, and the indication information is to indicate a transmitting end to determine a transmitting mode.

Optionally, the receiving end may transmit the indication information to the transmitting end, and the transmitting end selects an appropriate target OAM mode combination as the transmitting mode based on content in the indication information.

In an implementation, the indication information may include a target index number. For example, the receiving end determines a target OAM mode combination from preset K+1 OAM mode combinations, determines the target index number corresponding to the target OAM mode combination, and transmits first indication information to indicate to determine the transmitting mode of the transmitting end based on the target index number. For example, the receiving end determines the target OAM mode combination from the preset K+1 OAM mode combinations, determines the target index number corresponding to the target OAM mode combination, and transmits the target index number to the transmitting end via the indication information. Based on the target index number, the transmitting end may determine the OAM mode combination matching the target index number as the transmitting mode.

In another implementation, the indication information may include channel information, which may be channel state information (CSI) or signal reception quality. For example, the receiving end may determine the channel information about a wireless channel between the receiving end and the transmitting end, and transmit second indication information to the transmitting end. The second indication information is to indicate the transmitting end to determine the transmitting mode based on the channel information. For example, the receiving end transmits the channel information to the transmitting end via the indication information. Based on the channel information, the transmitting end may select and determine an OAM mode combination matching the channel information as the transmitting mode.

In yet another implementation, the indication information may include a first deflection angle between the transmitting end and the receiving end. For example, the receiving end determines the first deflection angle between the receiving end and the transmitting end, and transmits third indication information to indicate the transmitting end to determine the transmitting mode based on the first deflection angle. For example, the receiving end transmits the first deflection angle to the transmitting end via the indication information. Based on the first deflection angle, the transmitting end may select and determine an OAM mode combination matching the first deflection angle as the transmitting mode.

By implementing embodiments of the present disclosure, the receiving end may transmit the indication information to the transmitting end to indicate the transmitting end to determine the OAM mode combination for communication, so that the system capacity is maximized, the applicable scenes are expanded, and the gain is improved.

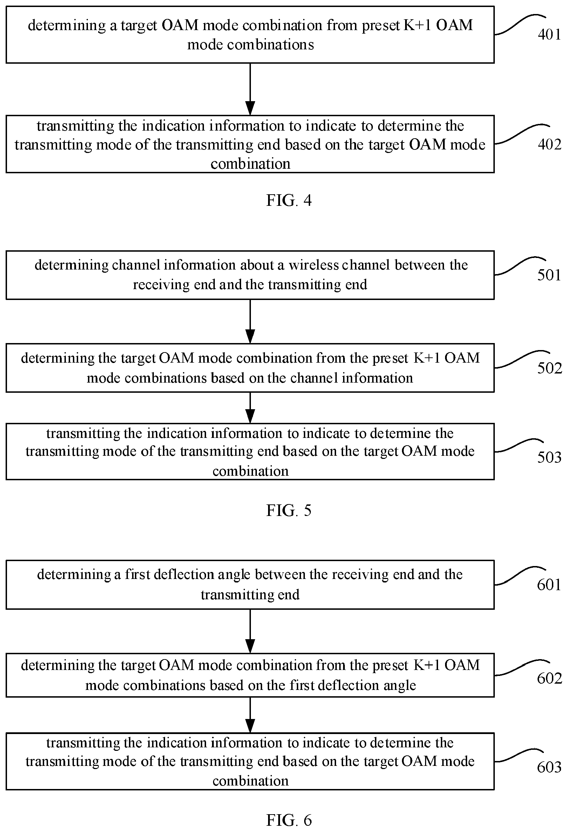

Referring to FIG. 4, FIG. 4 is a schematic flowchart illustrating a communication method based on orbital angular momentum (OAM) according to embodiments of the present disclosure. It should be noted that the communication method based on the OAM according to embodiments of the present disclosure is performed by the receiving end. As shown in FIG. 4, the communication method based on the OAM may include, but is not limited to, the following steps.

In step 401, a target OAM mode combination is determined from preset K+1 OAM mode combinations.

In this embodiment, K is a positive integer, K < N/2, and N represents a number of array elements emitting a uniform circular array (UCA).

Optionally, an OAM mode combination meeting a current channel state may be selected from the preset K + 1 OAM mode combinations as the transmitting mode of the transmitting end based on some information about the wireless channel between the receiving end and the transmitting end. In an implementation, an appropriate OAM mode combination may be selected from the preset K+1 OAM mode combinations as the target OAM mode combination based on the channel information about the wireless channel between the receiving end and the transmitting end. Alternatively, an appropriate OAM mode combination may be selected from the preset K+1 OAM mode combinations as the target OAM mode combination based on the deflection angle between the receiving end and the transmitting end.

It should be noted that the above given two examples of using the deflection angle or the channel information to determine the mode combination are merely for convenience of those skilled in the art to understand implementations of how to determine the OAM mode combination according to the deflection angle or the channel information, but cannot be understood as that the mode combination can only be determined by using the deflection angle or the channel information. For example, the mode combination may also be determined by using other variables in the CSI, and this is not particularly limited in the present disclosure.

It should also be noted that the K+1 OAM mode combinations in embodiments of the present disclosure may be preset. In order to enable the transmitting end to select different mode combinations to transmit information as the channel information or the deflection angle changes to maximize the system capacity, in embodiments of the present disclosure, a plurality of OAM mode combination solutions, e.g. K+1 OAM mode combination solutions, may be preset for the transmitting end to select different mode combinations to transmit the information, so that the system capacity may be maximized with the same transmission power.

In some embodiments, a formula of a first mode combination among the K+1 OAM mode combinations is represented as:

$$L = L' - \lfloor L'/(N/2) \rfloor * N$$

, where L' = 0,1, ..., N - 1; (1) and
a formula of a $k^{th}$ mode combination among the K+1 OAM mode combinations is represented as:

$$L = L' - \lfloor L'/(N/2) \rfloor * N$$

, where L' = I + 2k * n + S;

$$n = 0,1,2 \dots, \left\lfloor \frac{N-1}{2k} \right\rfloor$$

I = 0/ .../2k - 1; ; S = 0,1 ... k - 1; k = 1,2,3, ..., K; (2)
where L represents a mode value of the mode combination,

$$L \in \left[ -\frac{N}{2}, \frac{N}{2} \right)$$

, L' represents a transition value for calculating the mode value L, n and S are related to a number of L' modes, I E [0, N), I represents an initial mode for OAM selection, and N represents the number of array elements emitting the UCA.

It may be understood that the first mode combination among the above K+1 OAM mode combinations may represent a mode combination corresponding to a case where there is no inter-mode interference/the inter-mode interference is small; and the $k^{th}$ h mode combination among the K+1 OAM mode combinations may represent a mode combination corresponding to a case where the inter-mode interference among L±k modes is large, where k = 1,2,3, ..., K.

For example, in a case where k = 1, L±1 represents adjacent modes, and a formula of the adjacent (L±1) modes is represented as:

$$L = L' - \lfloor L'/(N/2) \rfloor * N$$

, where L' = I + 2 * n + S; I = 0 or 1; n = 0,1,2 ...,N - 12; S = 0.

For another example, in a case where k = 2, a formula of L±2 modes is represented as:

$$L = L' - \lfloor L'/(N/2) \rfloor * N$$

, where L' = I + 4 * n + S;

I = 0/1/2/3; n = 0,1,2 ..., $\left\lfloor \frac{N-1}{4} \right\rfloor$ ; S = 0,1.

For another example, in a case where k = K, a formula of L±K modes is represented as:

$$L = L' - \lfloor L'/(N/2) \rfloor * N$$

, where L' = I + 2K * n +

$$0,1,2 \dots, \left\lfloor \frac{N-1}{2K} \right\rfloor$$

S; I = 0/ .../2K - 1; n = ; S = 0,1 ... K - 1.

In step 402, the indication information is transmitted, and the indication information is to indicate to determine the transmitting mode of the transmitting end based on the target OAM mode combination.

Optionally, when the receiving end determines the target OAM mode combination from the preset K+1 OAM mode combinations, the receiving end may transmit the indication information to the transmitting end to indicate to determine the transmitting mode of the transmitting end based on the target OAM mode combination. In response to receiving the indication information, the transmitting end may take the target OAM mode combination as the transmitting mode of the transmitting end. In other words, the transmitting end will perform a communication based on the target OAM mode combination.

In an implementation, the receiving end stores the K +1 OAM mode combinations described above. For example, when the receiving end transmits the indication information to the transmitting end, the indication information may include a formula representation of the target OAM mode combination. After receiving the indication information transmitted by the receiving end, the transmitting end calculates a mode value according to the formula representation of the target OAM mode combination included in the indication information, and then uses the mode value to perform the communication.

In yet another implementation, both the receiving end and the transmitting end store the above-mentioned K+1 OAM mode combinations, different index numbers are set for different mode combinations, and the index numbers have a one-to-one correspondence with the mode combinations, so that a corresponding mode combination solution may be retrieved according to the index number. The receiving end and the transmitting end may store the index numbers locally. For example, the receiving end may obtain a target index number corresponding to the target OAM mode combination based on a preset correspondence between index numbers and mode combinations, and transmit the first indication information to indicate to determine the transmitting mode of the transmitting end based on the target index number.

That is to say, after determining the target OAM mode combination according to the channel information or the deflection angle, the receiving end may obtain the target index number corresponding to the target OAM mode combination based on the preset correspondence between index numbers and mode combinations, and transmit first indication information to the transmitting end to indicate the transmitting end to determine the transmitting mode based on the target index number. After receiving the first indication information, the transmitting end may find a corresponding OAM mode combination according to the target index number in the first indication information, and take the OAM mode combination corresponding to the target index number as the transmitting mode for communication.

In order to further maximize the system capacity and increase the gain, there may exist a case where a plurality of modes interfere with each other. For the case where a plurality of modes interfere with each other, embodiments of the present disclosure may select an intersection mode of different mode combinations as a transmission mode. In some embodiments, in a case where the deflection angle between the receiving end and the transmitting end is relatively large, a plurality of target OAM mode combinations exist. Moreover, the receiving end may obtain target index numbers respectively corresponding to the plurality of target OAM mode combinations based on the correspondence between index numbers and mode combinations, and transmit the first indication information to the transmitting end to indicate the transmitting end to determine the transmitting mode based on the target index numbers.

For example, after determining a plurality of target OAM mode combinations according to the CSI and the signal reception quality, the receiving end may obtain the target index numbers respectively corresponding to the plurality of the target OAM mode combinations according to the correspondence between index numbers and mode combinations, and transmit the first indication information to the transmitting end to indicate the transmitting end to determine the transmitting mode based on the target index numbers. After receiving the first indication information, the transmitting end may find OAM mode combinations respectively corresponding to the target index numbers according to the target index numbers in the first indication information, perform an intersection processing on the OAM mode combinations respectively corresponding to the target index numbers, and take an intersection mode of the OAM mode combinations respectively corresponding to the target index numbers as the transmitting mode of the transmitting end.

For example, it is assumed that N=8 and 1=0, and it is determined that the target OAM mode combinations are a L $\pm$ 2 mode combination (i.e., a mode combination corresponding to k = 2 among the K + 1 mode combinations) and a L $\pm$ 3 mode combination (i.e., a mode combination corresponding to k = 3 among the K + 1 mode combinations), where the L $\pm$ 2 mode combination and the L $\pm$ 3 mode combination are as follows:

k = 2: the calculated mode transition value L' = [0,1,4,5]; and
k = 3: the calculated mode transition value L' = [0,1,2,6,7,8].

Intersection of these two mode combinations is taken, that is, L' = [0,1]. The mode value L=[0,1] may be calculated based on the mode transition value L' and the formula expression of the mode L. The OAM modes with mode values of 0 and 1 are finally determined as the transmitting modes.

By implementing embodiments of the present disclosure, the target OAM mode combination(s) may be selected from a plurality of OAM mode combinations, and the transmitting end may perform the communication based on the selected mode combination solution(s), so that the system capacity may be maximized, the applicable scenes may be expanded, and the gain may be improved.

Referring to FIG. 5, FIG. 5 is a schematic flowchart illustrating another communication method based on orbital angular momentum (OAM) according to embodiments of the present disclosure. It should be noted that the communication method based on the OAM according to embodiments of the present disclosure is performed by the receiving end. As shown in FIG. 5, the communication method based on the OAM may include, but is not limited to, the following steps.

In step 501, channel information about a wireless channel between the receiving end and the transmitting end is determined.

In an implementation, channel estimation may be performed on the wireless channel between the receiving end and the transmitting end to obtain the channel information about the wireless channel between the receiving end and the transmitting end. The channel information may be the channel state information (CSI) and/or the signal reception quality.

For example where the receiving end is a terminal device, and the transmitting end is a network device, the receiving end may perform the channel estimation based on a channel state indication reference signal (CSI-RS) configured by the transmitting end to obtain the CSI of the wireless channel between the receiving end and the transmitting end. For another example, an updated synchronization signal may be obtained by eliminating intersymbol interference between orthogonal frequency division multiplexing (OFDM) symbols in a synchronization signal, a reference signal receiving power (RSRP) is determined according to the updated synchronization signal, a receiving signal strength indication (RSSI) is calculated according to the updated synchronization signal, and a reference signal receiving quality (RSRQ) is determined from the RSRP and the RSSI. It may be understood that other methods may also be used to obtain the CSI and the signal reception quality of the wireless channel between the receiving end and the transmitting end, and this is not particularly limited in the present disclosure.

In step 502, a target OAM mode combination is determined from preset K+1 OAM mode combinations based on the channel information.

In an implementation, the target OAM mode combination may be determined from the preset K+1 OAM mode combinations based on the channel information, and a preset mapping relationship between channel information and mode combinations.

It should also be noted that the K+1 OAM mode combinations in embodiments of the present disclosure may be preset. In order to enable the transmitting end to select different mode combinations to transmit information as the channel information changes to maximize the system capacity, in embodiments of the present disclosure, a plurality of OAM mode combination solutions, e.g. $K+1$ OAM mode combination solutions, may be preset for the transmitting end to select different mode combinations to transmit the information, so that the system capacity may be maximized with the same transmission power.

In some embodiments, a formula of a first mode combination among the K+1 OAM mode combinations is represented as:

$$L = L' - \lfloor L'/(N/2) \rfloor * N$$

, where L' = 0,1, ..., N - 1; (1) and
a formula of a $k^{th}$ mode combination among the K+1 OAM mode combinations is represented as:

$$L = L' - \lfloor L'/(N/2) \rfloor * N$$

, where L' = I + 2k * n + S;

$$n = 0,1,2 ..., \left\lfloor \frac{N-1}{2k} \right\rfloor$$

I = 0/ .../2k - 1; ; S = 0,1 ... k - 1; k = 1,2,3, ..., K; (2)
where L represents a mode value of the mode

$$L \in \left[ -\frac{N}{2}, \frac{N}{2} \right)$$

combination, , L' represents a transition value for calculating the mode value L, n and S are related to the number of L' modes, I E [0, N), I represents an initial mode for OAM selection, and N represents the number of array elements emitting the UCA.

It may be understood that the first mode combination among the above $K+1$ OAM mode combinations may represent a mode combination corresponding to a case where there is no inter-mode interference/the inter-mode interference is small; and the $k^{th}$ mode combination among the $K+1$ OAM mode combinations may represent a mode combination corresponding to a case where the inter-mode interference among $L\pm k$ modes is large, where $k = 1,2,3, ... , K$.

For example, in a case where k = 1, L±1 represents adjacent modes, and a formula of the adjacent (L±1) modes is represented as:

$$L = L' - \lfloor L'/(N/2) \rfloor * N$$

, where L' = I + 2 * n + S; I = 0 or 1; n = 0,1,2 ... , N - 12; S = 0.

For another example, in a case where k = 2, a formula of L±2 modes is represented as:

$$L = L' - \lfloor L'/(N/2) \rfloor * N$$

, where L' = I + 4 * n + S;

$$0,1,2 ..., \left\lfloor \frac{N-1}{4} \right\rfloor$$

I = 0/1/2/3; n = ; S = 0,1.

For another example, in a case where k = K, a

formula of $L\pm K$ modes is represented as:

$$L = L' - \lfloor L'/(N/2) \rfloor * N$$

, where L' = I + 2K * n +

$$0,1,2 ..., \left\lfloor \frac{N-1}{2K} \right\rfloor$$

S; I = 0/ .../2K - 1; n = ; S = 0,1 ... K - 1.

It should also be noted that a mapping relationship between mode combinations and different channel information may be pre-configured, so that after the channel information between the receiving end and the transmitting end is determined, the corresponding target OAM mode combination may be selected from the preset K + 1 OAM mode combinations according to the channel information and the mapping relationship. It may be understood that in a case where the channel information is relatively poor, it may correspond to a plurality of OAM mode combinations, so that an intersection mode of the plurality of mode combinations may be used as the transmitting mode of the transmitting end, thereby maximizing the system capacity as large as possible. It should be noted that, in embodiments of the present disclosure, the mapping relationship between mode combinations and different channel information may be configured based on a purpose of maximizing the channel capacity. For example, for a piece of channel information, a mode combination may be configured that enables the channel capacity corresponding to the channel information to be maximized. Alternatively, in embodiments of the present disclosure, the mapping relationship between mode combinations and different channel information may be configured based on a purpose of maximizing a channel SINR. For example, for a piece of channel information, a mode combination may be configured that enables the SINR of the channel corresponding to the channel information to be maximized. Embodiments of the present disclosure may also configure the mapping relationship between mode combinations and different channel information based on other conditions, which is not particularly limited in the present application.

In an implementation, the mapping relationship between channel information and mode combinations may be specified by a protocol or may be indicated by the network device via a signaling. For example, it is assumed that the transmitting end is the network device, and the receiving end is the terminal device, the transmitting end may indicate the mapping relationship between channel information and mode combinations via a signaling.

In step 503, indication information is transmitted, and the indication information is to indicate to determine the transmitting mode of the transmitting end based on the target OAM mode combination.

In embodiments of the present disclosure, the step 503 may be implemented as described in any of embodiments of the present disclosure, which is not particularly limited in embodiments of the present disclosure, and will not be elaborated here.

By implementing embodiments of the present disclosure, an appropriate OAM mode combination may be selected from a plurality of OAM mode combinations according to the channel information, so that the system capacity is maximized with the same transmission power, the applicable scenes may be expanded, and the gain may be improved.

Referring to FIG. 6, FIG. 6 is a schematic flowchart illustrating another communication method based on orbital angular momentum (OAM) according to embodiments of the present disclosure. It should be noted that the communication method based on the OAM according to embodiments of the present disclosure is performed by the receiving end. As shown in FIG. 6, the communication method based on the OAM may include, but is not limited to, the following steps.

In step 601, a first deflection angle between the receiving end and the transmitting end is determined.

In an implementation, the first deflection angle between the receiving end and the transmitting end may be determined based on angle of arrival (AOA) estimation or beam scanning.

It should be noted that in embodiments of the present disclosure, there are many ways to determine the first deflection angle, for example, the first deflection angle may be determined by an AOA estimation algorithm, or by means of the beam scanning. Implementations of the two examples will be given below.

As an example of a possible implementation, the deflection angle is estimated by the AOA estimation algorithm, and the obtained estimated value is taken as the first deflection angle between the receiving end and the transmitting end.

As an example of another possible implementation, the deflection angle may be quantized, a beamforming vector of the corresponding angle is encoded, and a pair of matched transmitting and receiving beams are determined through the beam scanning to calculate the deflection angle between the receiving end and the transmitting end.

It may be understood that the deflection angle is a variable in the CSI. The above-mentioned two methods for determining the first deflection angle are merely provided for the convenience of those skilled in the art to understand how to determine the first deflection angle, but cannot be considered as limitations on how to determine the first deflection angle. That is, other methods may also be used to determine the first deflection angle, or the mode combination may also be determined according to other variables in the CSI, both of which are not specifically limited in the present disclosure.

In step 602, a target OAM mode combination is determined from preset *K*+1 OAM mode combinations based on the first deflection angle.

In this embodiment, K is a positive integer, K < N/2, and N represents a number of array elements emitting a uniform circular array (UCA).

In an implementation, the target OAM mode combination may be determined from the preset K + 1 OAM mode combinations based on the first deflection angle, and a mapping relationship between deflection angles and mode combinations.

It should also be noted that the K+1 OAM mode combinations in embodiments of the present disclosure may be preset. In order to enable the transmitting end to select different mode combinations to transmit information as the deflection angle changes, in embodiments of the present disclosure, a plurality of OAM mode combination solutions, e.g. K+1 OAM mode combination solutions, may be preset for the transmitting end to select different mode combinations to transmit the information, so that the system capacity may be maximized with the same transmission power.

In some embodiments, a formula of a first mode combination among the K+1 OAM mode combinations is represented as:

$$L = L' - \lfloor L'/(N/2) \rfloor * N$$ , where L' = 0,1, ..., N - 1; (1) and

a formula of a $k^{th}$ mode combination among the K+1 OAM mode combinations is represented as:

$$L = L' - \lfloor L'/(N/2) \rfloor * N$$ , where L' = I + 2k * n + S;

$$n = 0,1,2 ..., \left\lfloor \frac{N-1}{2k} \right\rfloor$$ ; S =

I = 0/ .../2k - 1;

0,1 ... k - 1; k = 1,2,3, ..., K; (2)

where L represents a mode value of the mode combination, $L \in \left[ -\frac{N}{2}, \frac{N}{2} \right)$ , L' represents a transition value for calculating the mode value L, n and S are related to the number of L' modes, I E [0, N), I represents an initial mode for OAM selection, and N represents the number of array elements emitting the UCA.

It may be understood that the first mode combination among the above *K*+1 OAM mode combinations may represent a mode combination corresponding to a case where there is no inter-mode interference/the inter-mode interference is small; and the $k^{th}$ mode combination among the *K*+1 OAM mode combinations may represent a mode combination corresponding to a case where the inter-mode interference among L±k modes is large, where k = 1,2,3, ..., K.

For example, in a case where k = 1, L±1 represents adjacent modes, and a formula of the adjacent (L±1) modes is represented as:

$$L = L' - \lfloor L'/(N/2) \rfloor * N$$ , where L' = I + 2 * n + S; I = 0 or 1; n = 0,1,2 ... , N - 12; S = 0.

For another example, in a case where k = 2, a formula of L±2 modes is represented as:

$$L = L' - \lfloor L'/(N/2) \rfloor * N$$ , where L' = I + 4 * n +

$S; I = 0/1/2/3; n = 0,1,2 \ldots, \left\lfloor \frac{N-1}{4} \right\rfloor ; S = 0,1.$

For another example, in a case where k = K, a formula of L±K modes is represented as:

$$L = L' - \lfloor L'/(N/2) \rfloor * N$$

, where L' = I + 2K * n + S; I = 0/ .../2K - 1; $n = 0,1,2 \ldots, \left\lfloor \frac{N-1}{2K} \right\rfloor$ ; S = 0,1 ... K - 1.

In embodiments of the present disclosure, the mapping relationship between mode combinations and different deflection angles may also be pre-configured, so that after the first deflection angle between the receiving end and the transmitting end is determined, the corresponding target OAM mode combination may be selected from the preset *K*+1 OAM mode combinations according to the first deflection angle and the mapping relationship. In a case where the deflection angle is large, it may correspond to a plurality of OAM mode combinations. It should be noted that embodiments of the present disclosure may configure the mapping relationship between mode combinations and different deflection angles based on a purpose of maximizing the channel capacity. For example, for each deflection angle, a mode combination may be configured that enables the channel capacity corresponding to the deflection angle to be maximized. Alternatively, embodiments of the present disclosure may configure the mapping relationship between mode combinations and different deflection angles based on a purpose of maximizing the channel SINR. For example, for each deflection angle, a mode combination may be configured that enables the SINR of the channel corresponding to the deflection angle to be maximized. Embodiments of the present disclosure may also configure the mapping relationship between mode combinations and different deflection angles based on other conditions, which is not particularly limited in the present application.

In an implementation, the mapping relationship between deflection angles and mode combinations may be specified by a protocol or may be indicated by the network device via a signaling. For example, it is assumed that the transmitting end is the network device, and the receiving end is the terminal device, the transmitting end may indicate the mapping relationship between deflection angles and mode combinations via a signaling.

In step 603, indication information is transmitted, and the indication information is to indicate to determine the transmitting mode of the transmitting end based on the target OAM mode combination.

In embodiments of the present disclosure, the step 603 may be implemented as described in any of embodiments of the present disclosure, which is not particularly limited in embodiments of the present disclosure, and will not be elaborated here.

By implementing embodiments of the present disclosure, an appropriate OAM mode combination may be selected from a plurality of OAM mode combinations according to the deflection angle between the receiving end and the transmitting end, so that the system capacity is maximized with the same transmission power, the applicable scenes may be expanded, and the gain may be improved.

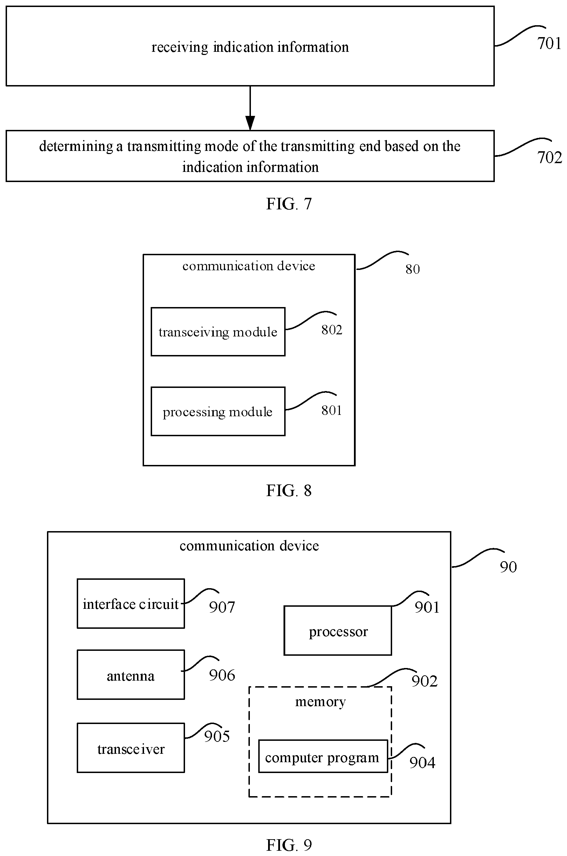

It may be understood that the above-mentioned embodiments describes implementations of the communication method based on the OAM according to embodiments of the present disclosure from a side of the receiving end. Embodiments of the present disclosure also propose a communication method based on the OAM, and implementations of the communication method based on the OAM will be described below from a side of the transmitting end. Referring to FIG. 7, FIG. 7 is a schematic flowchart of yet another communication method based on orbital angular momentum (OAM) according to embodiments of the present disclosure. It should be noted that the communication method based on the OAM according to embodiments of the present disclosure may be performed by the transmitting end. As shown in FIG. 7, the communication method based on the OAM may include, but is not limited to, the following steps.

In step 701, indication information is received.

The indication information may be transmitted by the receiving end after determining a target OAM mode combination from preset K+1 OAM mode combinations.

Optionally, a receiving end may select an OAM mode combination meeting a current channel state from the preset K+1 OAM mode combinations as a transmitting mode of the transmitting end based on some information about the wireless channel between the receiving end and the transmitting end. In an implementation, an appropriate OAM mode combination may be selected from the preset K+1 OAM mode combinations as the target OAM mode combination based on channel information about the wireless channel between the receiving end and the transmitting end. Alternatively, an appropriate OAM mode combination may be selected from the preset K+1 OAM mode combinations as the target OAM mode combination based on a deflection angle between the receiving end and the transmitting end. After determining the target OAM mode combination from the preset K + 1 OAM mode combinations, the receiving end may transmit the indication information to the transmitting end to indicate the transmitting end to determine the transmitting mode of the transmitting end based on the target OAM mode combination.

It should be noted that the above given two examples of using the deflection angle or the channel information to determine the mode combination are merely for convenience of those skilled in the art to understand implementations of how to determine the OAM mode combination according to the deflection angle or the channel information, but cannot be understood as that the mode combination can only be determined by using the deflection angle or the channel information. For example, the mode combination may also be determined by using other variables in the CSI, and this is not particularly limited in the present disclosure.

It should also be noted that the K+1 OAM mode combinations in embodiments of the present disclosure may be preset. In order to enable the transmitting end to select different mode combinations to transmit information as the channel information or the deflection angle changes to maximize the system capacity, in embodiments of the present disclosure, a plurality of OAM mode combination solutions, e.g. K+1 OAM mode combination solutions, may be preset for the transmitting end to select different mode combinations to transmit the information, so that the system capacity may be maximized with the same transmission power.

In some embodiments, a formula of a first mode combination among the K+1 OAM mode combinations is represented as:

$$L = L' - \lfloor L'/(N/2) \rfloor * N$$

, where L' = 0,1, ... , N - 1; (1) and

a formula of a $k^{th}$ mode combination among the K+1 OAM mode combinations is represented as:

$$L = L' - \lfloor L'/(N/2) \rfloor * N$$

, where L' = I + 2k * n + S;

$$n = 0,1,2 ..., \left\lfloor \frac{N-1}{2k} \right\rfloor$$

I = 0/ .../2k - 1; ; S = 0,1 ... k - 1; k = 1,2,3, ..., K; (2)

where L represents a mode value of the mode combination, $L \in \left[ -\frac{N}{2}, \frac{N}{2} \right)$, L' represents a transition value for calculating the mode value L, n and S are related to a number of L' modes, I ∈ [0, N), I represents an initial mode for OAM selection, and N represents a number of array elements emitting a uniform circular array (UCA).

It may be understood that the first mode combination among the above K+1 OAM mode combinations may represent a mode combination corresponding to a case where there is no inter-mode interference/the inter-mode interference is small; and the $k^{th}$ mode combination among the K+1 OAM mode combinations may represent a mode combination corresponding to a case where the inter-mode interference among L±k modes is large, where k = 1,2,3, ..., K.

For example, in a case where k = 1, L±1 represents adjacent modes, and a formula of the adjacent (L±1) modes is represented as:

$$L = L' - \lfloor L'/(N/2) \rfloor * N$$

, where L' = I + 2 * n + S; I = 0 or 1; n = 0,1,2 ... , N - 12; S = 0.

For another example, in a case where k = 2, a formula of L±2 modes is represented as:

$$L = L' - \lfloor L'/(N/2) \rfloor * N$$

, where L' = I + 4 * n + S; I = 0/1/2/3; n = $0,1,2 ..., \left\lfloor \frac{N-1}{4} \right\rfloor$ ; S = 0,1.

For another example, in a case where k = K, a formula of L±K modes is represented as:

$$L = L' - \lfloor L'/(N/2) \rfloor * N$$

, where L' = I + 2K * n + S; I = 0/ .../2K - 1; n = $0,1,2 ..., \left\lfloor \frac{N-1}{2K} \right\rfloor$ ; S = 0,1 ... K - 1.

In step 702, a transmitting mode of the transmitting end is determined based on the indication information.

Optionally, in response to receiving the indication information, the transmitting end may take the target OAM mode combination as the transmitting mode of the transmitting end. In other words, the transmitting end will perform a communication based on the target OAM mode combination.

In an implementation, the receiving end stores the K +1 OAM mode combinations described above. For example, when the receiving end transmits the indication information to the transmitting end, the indication information may include a formula representation of the target OAM mode combination. After receiving the indication information transmitted by the receiving end, the transmitting end calculates a mode value according to the formula representation of the target OAM mode combination included in the indication information, and then uses the mode value to perform the communication.

In yet another implementation, both the receiving end and the transmitting end store the above-mentioned K+1 OAM mode combinations, different index numbers are set for different mode combinations, and the index numbers have a one-to-one correspondence with the mode combinations, so that a corresponding mode combination solution may be retrieved according to the index number. The receiving end and the transmitting end may store the index numbers locally. For example, the receiving end may obtain a target index number corresponding to the target OAM mode combination based on a preset correspondence between index numbers and mode combinations, and transmit the indication information to indicate to determine the transmitting mode of the transmitting end based on the target index number.

That is to say, after determining the target OAM mode combination according to the CSI and the signal reception quality, the receiving end may obtain the target index number corresponding to the target OAM mode combination based on the preset correspondence between index numbers and mode combinations, and transmit indication information to the transmitting end to indicate the transmitting end to determine the transmitting mode based on the target index number. After receiving the indication information, the transmitting end may find a corresponding OAM mode combination from the preset K+1 OAM mode combinations according to the target index number in the indication information and the preset correspondence between index numbers and mode combinations, and take the OAM mode combination corresponding to the target index number as the transmitting mode for communication.

In order to further maximize the system capacity and increase the gain, there may exist a case where a plurality of modes interfere with each other. For the case where a plurality of modes interfere with each other, embodiments of the present disclosure may select an intersection mode of different mode combinations as a transmission mode. In some embodiments, in a case where the first deflection angle is relatively large, a plurality of target OAM mode combinations exist, target index numbers respectively corresponding to the plurality of target OAM mode combinations are obtained based on the correspondence between index numbers and mode combinations, and the indication information is transmitted to the transmitting end to indicate the transmitting end to determine the transmitting mode based on the target index numbers.

For example, after determining a plurality of target OAM mode combinations according to the CSI and the signal reception quality, the receiving end may obtain the target index numbers respectively corresponding to the plurality of the target OAM mode combinations according to the correspondence between index numbers and mode combinations, and transmit the indication information to the transmitting end to indicate the transmitting end to determine the transmitting mode based on the target index numbers. After receiving the indication information, the transmitting end may find OAM mode combinations respectively corresponding to the target index numbers from the preset K+1 OAM mode combinations according to the target index numbers in the indication information and the preset correspondence between index numbers and mode combinations, perform an intersection processing on the OAM mode combinations respectively corresponding to the target index numbers, and take an intersection mode of the OAM mode combinations respectively corresponding to the target index numbers as the transmitting mode of the transmitting end.

In another implementation, both the receiving end and the transmitting end store the above-mentioned K + 1 OAM mode combinations, and the transmitting end stores a mapping relationship between channel information and different OAM mode combinations. For example, the transmitting end may receive the indication information transmitted by the receiving end. The indication information may include the channel information; and according to the indication information, the transmitting end may determine the target OAM mode combination from the preset K+1 OAM mode combinations based on the channel information, and determine the transmitting mode of the transmitting end based on the target OAM mode combination.

As an example, the transmitting end may determine the target OAM mode combination from the preset K+1 OAM mode combinations based on the channel information, and the preset mapping relationship between channel information and mode combinations. It should be noted that in embodiments of the present disclosure, the mapping relationship between mode combinations and different channel information may be configured based on a purpose of maximizing the channel capacity. For example, for a piece of channel information, a mode combination may be configured that enables the channel capacity corresponding to the channel information to be maximized. Alternatively, in embodiments of the present disclosure, the mapping relationship between mode combinations and different channel information may be configured based on a purpose of maximizing a channel SINR. For example, for a piece of channel information, a mode combination may be configured that enables the SINR of the channel corresponding to the channel information to be maximized. Embodiments of the present disclosure may also configure the mapping relationship between mode combinations and different channel information based on other conditions, which is not particularly limited in the present application.

In yet another implementation, both the receiving end and the transmitting end store the above-mentioned K+1 OAM mode combinations, and the transmitting end stores a mapping relationship between deflection angles and different OAM mode combinations. For example, the transmitting end may receive the indication information transmitted by the receiving end. The indication information may include a first deflection angle between the receiving end and the transmitting end; and according to the indication information, the transmitting end may determine the target OAM mode combination from the preset K+1 OAM mode combinations based on the first deflection angle, and determine the transmitting mode of the transmitting end based on the target OAM mode combination.

As an example, the transmitting end may determine the target OAM mode combination from the preset K+1 OAM mode combinations based on the first deflection angle, and the mapping relationship between deflection angles and mode combinations. It should be noted that embodiments of the present disclosure may configure the mapping relationship between mode combinations and different deflection angles based on a purpose of maximizing the channel capacity. For example, for each deflection angle, a mode combination may be configured that enables the channel capacity corresponding to the deflection angle to be maximized. Alternatively, embodiments of the present disclosure may configure the mapping relationship between mode combinations and different deflection angles based on a purpose of maximizing the channel SINR. For example, for each deflection angle, a mode combination may be configured that enables the SINR of the channel corresponding to the deflection angle to be maximized. Embodiments of the present disclosure may also configure the mapping relationship between mode combinations and different deflection angles based on other conditions, which is not particularly limited in the present application.

In order to further maximize the system capacity and increase the gain, there may exist a case where a plurality of modes interfere with each other. For the case where a plurality of modes interfere with each other, embodiments of the present disclosure may select an intersection mode of different mode combinations as a transmission mode. In some embodiments, it is assumed that the first deflection angle is relatively large, after determining a plurality of target OAM mode combinations based on the first deflection angle, the transmitting end may perform the intersection processing on the plurality of target OAM mode combinations, that is, the intersection mode of the plurality of target OAM mode combinations serves as the transmitting mode of the transmitting end. For example, it is assumed that N=8 and 1=0, and it is determined that the target OAM mode combinations are a L $\pm$ 2 mode combination (i.e., a mode combination corresponding to k = 2 among the K + 1 mode combinations) and a L $\pm$ 3 mode combination (i.e., a mode combination corresponding to k = 3 among the K + 1 mode combinations), where the L $\pm$ 2 mode combination and the L $\pm$ 3 mode combination are as follows:

k = 2: the calculated mode transition value L' = [0,1,4,5]; and
k = 3: the calculated mode transition value L' = [0,1,2,6,7,8].

Intersection of these two mode combinations is taken, that is, L' = [0,1]. The mode value L=[0,1] may be calculated based on the mode transition value L' and the formula expression of the mode L. The OAM modes with mode values of 0 and 1 are finally determined as the transmitting modes.

By implementing embodiments of the present disclosure, the target OAM mode combination(s) may be selected from a plurality of OAM mode combinations, and the transmitting end may perform the communication based on the selected mode combination solution(s), so that the system capacity may be maximized, the applicable scenes may be expanded, and the gain may be improved.

In the above-mentioned embodiments provided by the present disclosure, the methods according to embodiments of the present disclosure are described from the perspectives of the receiving end and the transmitting end, respectively. In order to realize various functions in the methods according to the above-mentioned embodiments of the present disclosure, the transmitting end and the receiving end may include a hardware structure and a software module, and the above-mentioned various functions are realized in the form of the hardware structure, the software module, or a combination of the hardware structure and the software module. Some of the functions described above may be performed by the hardware structure, the software module, or the combination of the hardware structure and the software module.

Referring to FIG. 8, FIG. 8 is a schematic block diagram illustrating a communication device 80 according to embodiments of the present disclosure. The communication device 80 shown in FIG. 8 may include a processing module 801 and a transceiving module 802. The transceiving module 802 may include a transmitting module and/or a receiving module. The transmitting module is configured to implement a transmitting function, and the receiving module is configured to implement a receiving function. The transceiving module 802 may implement the transmitting function and/or the receiving function.

The communication device 80 may be the receiving end, a device in the receiving end, or a device that may be matched for use with the receiving end. Alternatively, the communication device 80 may be the transmitting end, a device in the transmitting end, or a device that may be matched for use with the transmitting end.

For the case where the communication device 80 is the receiving end, in embodiments of the present disclosure, the transceiving module 802 is configured to transmit indication information, and the indication information is to indicate the transmitting end to determine a transmitting mode.

In an implementation, the processing module 801 is configured to determine a target OAM mode combination from preset K+1 OAM mode combinations, where K is a positive integer, K < N/2, and N represents a number of array elements emitting a UCA; and the transceiving module 802 is configured to transmit the indication information, and the indication information is to indicate to determine the transmitting mode of the transmitting end based on the target OAM mode combination.

In an implementation, the processing module 801 is configured to determine channel information about a wireless channel between the receiving end and the transmitting end; and determine the target OAM mode combination from the preset K + 1 OAM mode combinations based on the channel information.

In an implementation, the processing module 801 is configured to determine the target OAM mode combination from the preset K+1 OAM mode combinations based on the channel information, and a preset mapping relationship between channel information and mode combinations.

In an implementation, the mapping relationship between channel information and mode combinations is configured based on a purpose for maximizing the channel capacity or maximizing the channel SINR.

In an implementation, the processing module 801 is configured to determine a first deflection angle between the receiving end and the transmitting end; and

determine the target OAM mode combination from the preset K+1 OAM mode combinations based on the first deflection angle, where K is the positive integer, K < N/2, and N represents the number of array elements emitting the UCA.

In a possible implementation, the processing module 801 is configured to determine the target OAM mode combination from the preset K+1 OAM mode combinations based on the first deflection angle, and a preset mapping relationship between deflection angles and mode combinations.

In an implementation, the mapping relationship between deflection angles and mode combinations is configured based on a purpose for maximizing the channel capacity or maximizing the channel SINR.

In a possible implementation, a formula of a first mode combination among the K+1 OAM mode combinations is represented as:

$$L = L' - \lfloor L'/(N/2) \rfloor * N$$

, where L' = 0,1, ..., N - 1; (1) and
a formula of a $k^{th}$ mode combination among the K+1 OAM mode combinations is represented as:

$$L = L' - \lfloor L'/(N/2) \rfloor * N$$

, where L' = I + 2k * n + S;

$$n = 0,1,2 \ldots, \left\lfloor \frac{N-1}{2k} \right\rfloor$$

I = 0/ .../2k - 1; ; S = 0,1 ... k - 1; k = 1,2,3, ..., K; (2)
where L represents a mode value of the mode

$$L \in \left[ -\frac{N}{2}, \frac{N}{2} \right)$$

combination, , L' represents a transition value for calculating the mode value L, n and S are related to a number of L' modes, I E [0, N), I represents an initial mode for OAM selection, and N represents the number of array elements emitting the UCA.

In an implementation, the processing module 801 is configured to obtain a target index number corresponding to the target OAM mode combination based on a preset correspondence between index numbers and mode combinations; and the transceiving module 802 is configured to transmit first indication information to indicate to determine the transmitting mode of the transmitting end based on the target index number.

In a possible implementation, a plurality of target OAM mode combinations exist, and the processing module 801 is configured to obtain target index numbers respectively corresponding to the plurality of target OAM mode combinations based on the correspondence between index numbers and mode combinations.

In an implementation, the processing module 801 is configured to determine channel information about a wireless channel between the receiving end and the transmitting end; and the transceiving module 802 is configured to transmit second indication information to indicate the transmitting end to determine the transmitting mode based on the channel information.

In an implementation, the processing module 801 is configured to determine a first deflection angle between the receiving end and the transmitting end; and the transceiving module 802 is configured to transmit third indication information to indicate the transmitting end to determine the transmitting mode based on the first deflection angle.

In the case where the communication device 80 is the transmitting end, in embodiments of the present disclosure, the transceiving module 802 is configured to receive indication information; and the processing module 801 is configured to determine a transmitting mode of the transmitting end based on the indication information.

In an implementation, the indication information includes a target index number, and the processing module 801 is configured to determine a target OAM mode combination corresponding to the target index number from preset K+1 OAM mode combinations based on the indication information and a preset correspondence between index numbers and mode combinations, where K is a positive integer, K < N/2, and N represents a number of array elements emitting a UCA; and determine the target OAM mode combination corresponding to the target index number as the transmitting mode of the transmitting end.

In an implementation, the indication information includes a plurality of target index numbers, and the processing module 801 is configured to determine a plurality of target OAM mode combinations corresponding to the plurality of target index numbers from the preset K + 1 OAM mode combinations based on the indication information and the preset correspondence between index numbers and mode combinations, where K is the positive integer, K < N/2, and N represents the number of array elements emitting the UCA; and select an intersection mode of the plurality of target OAM mode combinations as the transmitting mode of the transmitting end.

In an implementation, the indication information includes channel information, and the processing module 801 is configured to determine the target OAM mode combination based on the channel information; and determine the transmitting mode of the transmitting end based on the target OAM mode combination.

In a possible implementation, the processing module 801 is configured to determine the target OAM mode combination from preset K + 1 OAM mode combinations based on the channel information, where K is the positive integer, K < N/2, and N represents the number of array elements emitting the UCA.

In a possible implementation, the processing module 801 is configured to determine the target OAM mode combination from the preset K+1 OAM mode combinations based on the channel information, and a preset mapping relationship between channel information and mode combinations.

In a possible implementation, the mapping relationship between channel information and mode combinations is configured based on a purpose for maximizing the channel capacity or maximizing the channel SINR.

In an implementation, the indication information includes a first deflection angle between the receiving end and the transmitting end, and the processing module 801 is configured to determine the target OAM mode combination from the preset K+1 OAM mode combinations based on the first deflection angle, where K is the positive integer, K < N/2, and N represents the number of array elements emitting the UCA.

In a possible implementation, the processing module 801 is configured to determine the target OAM mode combination from the preset K+1 OAM mode combinations based on the first deflection angle, and a mapping relationship between deflection angles and mode combinations.

In an implementation, the mapping relationship between deflection angles and mode combinations is configured based on a purpose for maximizing the channel capacity or maximizing the channel SINR.

In a possible implementation, a formula of a first mode combination among the K+1 OAM mode combinations is represented as:

$$L = L' - \lfloor L'/(N/2) \rfloor * N$$

, where L' = 0,1, ..., N - 1; (1) and

a formula of a $k^{th}$ mode combination among the K+1 OAM mode combinations is represented as:

$$L = L' - \lfloor L'/(N/2) \rfloor * N$$

, where L' = I + 2k * n + S;

$$n = 0,1,2 \ldots, \left\lfloor \frac{N-1}{2k} \right\rfloor$$

I = 0/ .../2k - 1; ; S = 0,1 ... k - 1; k = 1,2,3, ..., K; (2)

where L represents a mode value of the mode combination,

$$L \in \left[ -\frac{N}{2}, \frac{N}{2} \right)$$

, L' represents a transition value for calculating the mode value L, n and S are related to a number of L' modes, I ∈ [0, N), I represents an initial mode for OAM selection, and N represents the number of array elements emitting the UCA.

Regarding the devices in the above embodiments, the specific manner in which the various modules perform operations has been described in detail in connection with embodiments of the method and will not be described in detail herein.

Referring to FIG. 9, FIG. 9 is a schematic block diagram illustrating another communication device 90 according to embodiments of the present disclosure. The communication device 90 may be the receiving end or the transmitting end, or may be a chip, a chip system, or a processor supporting the receiving end to implement the above-mentioned method, or may be a chip, a chip system or a processor supporting the transmitting end to implement the above-mentioned method. The device may be used to implement the methods as described in the method embodiments described above, with particular reference to the description of the method embodiments described above.

The communication device 90 may include one or more processors 901. The processor 901 may be a general-purpose processor or a special-purpose processor, etc. It may be, for example, a baseband processor or a central processor. The baseband processor may be used to process a communication protocol and communication data, and the central processor may be used to control a communication device (such as a base station, a baseband chip, a terminal device, a terminal device chip, a DU or a CU, etc.), execute a computer program, and process data of the computer program.

Optionally, the communication device 90 may further include one or more memories 902 on which the computer program 904 may be stored, and the processor 901 executes the computer program 904 to cause the communication device 90 to perform the method as described in the above method embodiments. Optionally, the memory 902 may also have data stored therein. The communication device 90 and the memory 902 may be provided independently or integrated together.

Optionally, the communication device 90 may further include a transceiver 905 and an antenna 906. The transceiver 905 may be referred to as a transceiving unit, a transceiving machine, or a transceiving circuit or the like for implementing a transceiving function. The transceiver 905 may include a receiver and a transmitter, the receiver may be referred to as a receiving machine, a receiving circuit or the like for implementing a receiving function; and the transmitter may be referred to as a transmitting machine, a transmission circuit or the like for implementing a transmission function.

Optionally, the communication device 90 may further include one or more interface circuits 907. The interface circuit 907 is configured to receive and transmit a code instruction to the processor 901. The processor 901 executes the code instruction to enable the communication device 90 to perform the method described in any of the above method embodiments.

In the case where the communication device 90 is the receiving end, the processor 901 is configured to perform step 401 in FIG. 4, step 501 and step 502 in FIG. 5, or step 601 and step 602 in FIG. 6. The transceiver 905 is configured to perform step 301 in FIG. 3, step 402 in FIG. 4, step 503 in FIG. 5, or step 603 in FIG. 6.

In the case where the communication device 90 is the transmitting end, the transceiver 905 is configured to perform step 701 in FIG. 7. The processor 901 is configured to perform step 702 in FIG. 7.

In an implementation, the processor 901 may include the transceiver for implementing the receiving and transmitting functions. For example, the transceiver may be a transceiving circuit, an interface, or an interface circuit. The transceiving circuit, the interface, or the interface circuit for implementing the receiving and transmitting functions may be separate or integrated. The transceiving circuit, the interface or the interface circuit may be configured to read and write code/data, or may be configured to transmit or transfer signals.

In an implementation, the processor 901 may store the computer program 903 that, when run on the processor 901, enables the communication device 90 to perform the method described in any of the above method embodiments. The computer program 903 may be solidified in the processor 901, in which case the processor 901 may be implemented in hardware.

In an implementation, the communication device 90 may include a circuit that may perform the transmitting, receiving or communicating functions in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies, such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be the receiving end or the transmitting end, but the scope of the communication device described in the present disclosure is not limited thereto. The structure of the communication device may not be limited by FIG. 9. The communication device may be a stand-alone device or may be part of a larger device. For example, the communication device may be:

(1) a stand-alone integrated circuit (IC), or a chip, or a chip system or a subsystem;
(2) a set of one or more ICs, optionally the set of ICs may also include a storage component for storing the data and the computer program;
(3) an ASIC such as a modem;
(4) modules that may be embedded in other devices;
(5) a receiver, a terminal device, an intelligent terminal device, a cellular phone, a wireless device, a handset, a mobile unit, an on-vehicle device, a network device, a cloud device, an artificial intelligence device, etc.;
(6) Others.

Those skilled in the art may further appreciate that the various illustrative logical blocks and steps described in embodiments of the present disclosure may be implemented in electronic hardware, computer software, or a combinations thereof. Whether such functionality is implemented as hardware or software depends upon particular application and design requirement of the overall system. Those skilled in the art may implement the described functionality in varying ways for each particular application, but such implementation should not be understood as beyond the scope of protection of embodiments of the present disclosure.

Embodiments of the present disclosure also provide a communication system based on the OAM. The system includes the communication device as the receiving end and the communication device as the transmitting end in the embodiment of FIG. 8. Alternatively, the system includes the communication device as the receiving end and the communication device as the transmitting end in the embodiment of FIG. 9.

The present disclosure also provides a readable storage medium having stored therein instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

**Claims**

1. A communication method based on orbital angular momentum (OAM), performed by a receiving end, comprising:
   transmitting indication information to indicate a transmitting end to determine a transmitting mode.

2. The method of claim 1, wherein transmitting the indication information to indicate the transmitting end to determine the transmitting mode comprises:

   determining a target OAM mode combination from preset K+1 OAM mode combinations, wherein K is a positive integer, K < N/2, and N represents a number of array elements emitting a uniform circular array (UCA); and
   transmitting the indication information to indicate to determine the transmitting mode of the transmitting end based on the target OAM mode combination.

3. The method of claim 2, wherein determining the target OAM mode combination from the preset K+1 OAM mode combinations comprises:

   determining channel information about a wireless channel between the receiving end and the transmitting end; and
   determining the target OAM mode combination from the preset K+1 OAM mode combinations based on the channel information.

4. The method of claim 3, wherein determining the target OAM mode combination from the preset K+1 OAM mode combinations based on the channel information comprises:
   determining the target OAM mode combination from the preset K+1 OAM mode combinations based on the channel information, and a preset mapping relationship between channel information and mode combinations.

5. The method of claim 4, wherein the mapping relationship between channel information and mode combinations is configured based on a purpose for maximizing a channel capacity or maximizing a channel signal to interference plus noise ratio (SINR).

6. The method of claim 2, wherein determining the target OAM mode combination from the preset K+1 OAM mode combinations comprises:

determining a first deflection angle between the receiving end and the transmitting end; and determining the target OAM mode combination from the preset K+1 OAM mode combinations based on the first deflection angle, wherein K is the positive integer, K < N/2, and N represents the number of array elements emitting the UCA.

7. The method of claim 6, wherein determining the target OAM mode combination from the preset K+1 OAM mode combinations based on the first deflection angle comprises:
determining the target OAM mode combination from the preset K+1 OAM mode combinations based on the first deflection angle, and a preset mapping relationship between deflection angles and mode combinations.

8. The method of claim 7, wherein the mapping relationship between deflection angles and mode combinations is configured based on a purpose for maximizing a channel capacity or maximizing a channel SINR.

9. The method of any one of claims 2 to 8, wherein a formula of a first mode combination among the K+1 OAM mode combinations is represented as:

$$L = L' - \lfloor L'/(N/2) \rfloor * N$$, where L' = 0,1,..., N - 1; and
a formula of a k-th mode combination among the K + 1 OAM mode combinations is represented as:

$$L = L' - \lfloor L'/(N/2) \rfloor * N$$, where L'
= I + 2k * n + S;

$$n = 0,1,2 \dots , \left\lfloor \frac{N-1}{2k} \right\rfloor$$;
I = 0/ .../2k - 1; S
= 0,1...k - 1; k = 1,2,3, ..., K;
where L represents a mode value of the mode combination, $$L \in \left[ -\frac{N}{2}, \frac{N}{2} \right)$$, L' represents a transition value for calculating the mode value L, n and S are related to a number of L' modes, I E [0, N), I represents an initial mode for OAM selection, and N represents the number of array elements emitting the UCA.

10. The method of claim 2, wherein transmitting the indication information to indicate to determine the transmitting mode of the transmitting end based on the target OAM mode combination comprises:

obtaining a target index number corresponding to the target OAM mode combination based on a preset correspondence between index numbers and mode combinations; and transmitting first indication information, wherein the first indication information is to indicate to determine the transmitting mode of the transmitting end based on the target index number.

11. The method of claim 10, wherein a plurality of target OAM mode combinations exist, and obtaining the target index number corresponding to the target OAM mode combination based on the preset correspondence between index numbers and mode combinations comprises:
obtaining target index numbers respectively corresponding to the plurality of target OAM mode combinations based on the correspondence between index numbers and mode combinations.

12. The method of claim 1, wherein transmitting the indication information to indicate the transmitting end to determine the transmitting mode comprises:

determining channel information about a wireless channel between the receiving end and the transmitting end; and transmitting second indication information, wherein the second indication information is to indicate the transmitting end to determine the transmitting mode based on the channel information.

13. The method of claim 1, wherein transmitting the indication information to indicate the transmitting end to determine the transmitting mode comprises:

determining a first deflection angle between the receiving end and the transmitting end; and transmitting third indication information, wherein the third indication information is to indicate the transmitting end to determine the transmitting mode based on the first deflection angle.

14. A communication method based on orbital angular momentum (OAM), performed by a transmitting end, comprising:

receiving indication information; and determining a transmitting mode of the transmitting end based on the indication information.

**15.** The method of claim 14, wherein the indication information comprises a target index number, and determining the transmitting mode of the transmitting end based on the indication information comprises:

determining a target OAM mode combination corresponding to the target index number from preset K+1 OAM mode combinations based on the indication information and a preset correspondence between index numbers and mode combinations, wherein K is a positive integer, K < N/2, and N represents a number of array elements emitting a uniform circular array (UCA); and
determining the target OAM mode combination corresponding to the target index number as the transmitting mode of the transmitting end.

**16.** The method of claim 14, wherein the indication information comprises a plurality of target index numbers, and determining the transmitting mode of the transmitting end based on the indication information comprises:

determining a plurality of target OAM mode combinations corresponding to the plurality of target index numbers from preset K+1 OAM mode combinations based on the indication information and a preset correspondence between index numbers and mode combinations, wherein K is a positive integer, K < N/2, and N represents a number of array elements emitting a uniform circular array (UCA); and
selecting an intersection mode of the plurality of target OAM mode combinations as the transmitting mode of the transmitting end.

**17.** The method of claim 14, wherein the indication information comprises channel information; and determining the transmitting mode of the transmitting end based on the indication information comprises:

determining a target OAM mode combination based on the channel information; and
determining the transmitting mode of the transmitting end based on the target OAM mode combination.

**18.** The method of claim 17, wherein determining the target OAM mode combination based on the channel information comprises:
determining the target OAM mode combination from preset K +1 OAM mode combinations based on the channel information, wherein K is a positive integer, K < N/2, and N represents a number of array elements emitting a uniform circular array (UCA).

**19.** The method of claim 18, wherein determining the target OAM mode combination from the preset K+1 OAM mode combinations based on the channel information comprises:
determining the target OAM mode combination from the preset K + 1 OAM mode combinations based on the channel information, and a preset mapping relationship between channel information and mode combinations.

**20.** The method of claim 19, wherein the mapping relationship between channel information and mode combinations is configured based on a purpose for maximizing a channel capacity or maximizing a channel signal to interference plus noise ratio (SINR).

**21.** The method of claim 14, wherein the indication information comprises a first deflection angle between a receiving end and the transmitting end; and determining the transmitting mode of the transmitting end based on the indication information comprises:
determining a target OAM mode combination from preset K+1 OAM mode combinations based on the first deflection angle, wherein K is a positive integer, K < N/2, and N represents a number of array elements emitting a uniform circular array (UCA).

**22.** The method of claim 21, wherein determining the target OAM mode combination from the preset K+1 OAM mode combinations based on the first deflection angle comprises:
determining the target OAM mode combination from the preset K + 1 OAM mode combinations based on the first deflection angle, and a preset mapping relationship between deflection angles and mode combinations.

**23.** The method of claim 22, wherein the mapping relationship between deflection angles and mode combinations is configured based on a purpose for maximizing a channel capacity or maximizing a channel signal to interference plus noise ratio (SINR).

**24.** The method of any one of claims 15 to 16 and 18 to 23, wherein a formula of a first mode combination among the K+1 OAM mode combinations is represented as:

$$L = L' - \lfloor L'/(N/2) \rfloor * N$$, where L' = 0,1,..., N - 1; and
a formula of a $k^{th}$ mode combination among the K + 1 OAM mode combinations is represented as:

$$L = L' - \lfloor L'/(N/2) \rfloor * N$$, where L' = l + 2k * n + S;

$$n = 0,1,2 \dots, \left\lfloor \frac{N-1}{2k} \right\rfloor$$

I = 0/ .../2k - 1; ; S= 0,1...k - 1; k = 1,2,3, ..., K; where L represents a mode value of the

$$L \in \left[ -\frac{N}{2}, \frac{N}{2} \right)$$

mode combination, , L' represents a transition value for calculating the mode value L, n and S are related to a number of L' modes, I E [0, N), I represents an initial mode for OAM selection, and N represents the number of array elements emitting the UCA.

25. A communication device, comprising:
a transceiving module configured to transmit indication information, wherein the indication information is to indicate a transmitting end to determine a transmitting mode.

26. The communication device of claim 25, further comprising:

a processing module configured to determine a target OAM mode combination from preset K + 1 OAM mode combinations, wherein K is a positive integer, K < N/2, and N represents a number of array elements emitting a uniform circular array (UCA); and
wherein the transceiving module is configured to transmit the indication information, wherein the indication information is to indicate to determine the transmitting mode of the transmitting end based on the target OAM mode combination.

27. The communication device of claim 26, wherein the processing module is configured to:

determine channel information about a wireless channel between a receiving end and the transmitting end; and
determine the target OAM mode combination from the preset K+1 OAM mode combinations based on the channel information.

28. The communication device of claim 27, wherein the processing module is configured to:
determine the target OAM mode combination from the preset K+1 OAM mode combinations based on the channel information, and a preset mapping relationship between channel information and mode combinations.

29. The communication device of claim 28, wherein the mapping relationship between channel information and mode combinations is configured based on a purpose for maximizing a channel capacity or maximizing a channel signal to interference plus noise ratio (SINR).

30. The communication device of claim 26, wherein the processing module is configured to:

determine a first deflection angle between a receiving end and the transmitting end; and
determine the target OAM mode combination from the preset K+1 OAM mode combinations based on the first deflection angle, wherein K is the positive integer, K < N/2, and N represents the number of array elements emitting the UCA.

31. The communication device of claim 30, wherein the processing module is configured to:
determine the target OAM mode combination from the preset K+1 OAM mode combinations based on the first deflection angle, and a preset mapping relationship between deflection angles and mode combinations.

32. The communication device of claim 31, wherein the mapping relationship between deflection angles and mode combinations is configured based on a purpose for maximizing a channel capacity or maximizing a channel signal to interference plus noise ratio (SINR).

33. The communication device of any one of claims 26 to 32, wherein a formula of a first mode combination among the K+1 OAM mode combinations is represented as:

$$L = L' - \lfloor L'/(N/2) \rfloor * N$$

, where L' = 0,1,..., N - 1; and
a formula of a $k^{th}$ mode combination among the K + 1 OAM mode combinations is represented as:

$$L = L' - \lfloor L'/(N/2) \rfloor * N$$

, where L' = I + 2k * n + S;

$$n = 0,1,2 \dots, \left\lfloor \frac{N-1}{2k} \right\rfloor$$

I = 0/ .../2k - 1; ;S= 0,1...k - 1; k = 1,2,3, ..., K; where L represents a mode value of the

$$L \in \left[ -\frac{N}{2}, \frac{N}{2} \right)$$

mode combination, , L' represents a transition value for calculating the mode value L, n and S are related to a number of L' modes, I E [0, N), I represents an initial mode for OAM selection, and N represents the number of array elements emitting the UCA.

**34.** The communication device of claim 26, wherein

the processing module is configured to obtain a target index number corresponding to the target OAM mode combination based on a preset correspondence between index numbers and mode combinations; and

the transceiving module is configured to transmit first indication information, wherein the first indication information is to indicate to determine the transmitting mode of the transmitting end based on the target index number.

**35.** The communication device of claim 34, wherein a plurality of target OAM mode combinations exist; and the processing module is configured to:

obtain target index numbers respectively corresponding to the plurality of target OAM mode combinations based on the correspondence between index numbers and mode combinations.

**36.** The communication device of claim 26, wherein

the processing module is configured to determine channel information about a wireless channel between a receiving end and the transmitting end; and

the transceiving module is configured to transmit second indication information, wherein the second indication information is to indicate the transmitting end to determine the transmitting mode based on the channel information.

**37.** The communication device of claim 26, wherein

the processing module is configured to determine a first deflection angle between a receiving end and the transmitting end; and

the transceiving module is configured to transmit third indication information, wherein the third indication information is to indicate the transmitting end to determine the transmitting mode based on the first deflection angle.

**38.** A communication device, comprising:

a transceiving module configured to receive indication information; and

a processing module configured to determine a transmitting mode of a transmitting end based on the indication information.

**39.** The communication device of claim 38, wherein the indication information comprises a target index number, and the processing module is configured to:

determine a target orbital angular momentum (OAM) mode combination corresponding to the target index number from preset K+1 OAM mode combinations based on the indication information and a preset correspondence between index numbers and mode combinations, wherein K is a positive integer, K < N/2, and N represents a number of array elements emitting a uniform circular array (UCA); and

determine the target OAM mode combination corresponding to the target index number as the transmitting mode of the transmitting end.

**40.** The communication device of claim 39, wherein the indication information comprises a plurality of target index numbers, and the processing module is configured to:

determine a plurality of target OAM mode combinations corresponding to the plurality of target index numbers from the preset K+1 OAM mode combinations based on the indication information and the preset correspondence between index numbers and mode combinations, wherein K is the positive integer, K < N/2, and N represents the number of array elements emitting the UCA; and

select an intersection mode of the plurality of target OAM mode combinations as the transmitting mode of the transmitting end.

**41.** The communication device of claim 38, wherein the indication information comprises channel information, and the processing module is configured to:

determine a target OAM mode combination based on the channel information; and

determine the transmitting mode of the transmitting end based on the target OAM mode combination.

**42.** The communication device of claim 41, wherein the processing module is configured to:

determine the target OAM mode combination from preset K+1 OAM mode combinations based on the channel information, wherein K is a positive integer, K < N/2, and N represents a number of array elements emitting a uniform circular array (UCA).

**43.** The communication device of claim 42, wherein the processing module is configured to:

determine the target OAM mode combination from the preset K +1 OAM mode combinations based on the channel information, and a preset mapping relationship between channel information and mode combinations.

**44.** The communication device of claim 43, wherein the mapping relationship between channel information and mode combinations is configured based on a purpose for maximizing a channel capacity or maximizing a channel signal to interference plus noise ratio (SINR).

45. The communication device of claim 38, wherein the indication information comprises a first deflection angle between a receiving end and the transmitting end, and the processing module is configured to: determine a target OAM mode combination from preset K+1 OAM mode combinations based on the first deflection angle, wherein K is a positive integer, K < N/2, and N represents a number of array elements emitting a uniform circular array (UCA).

46. The communication device of claim 45, wherein the processing module is configured to:
determine the target OAM mode combination from the preset K +1 OAM mode combinations based on the first deflection angle, and a preset mapping relationship between deflection angles and mode combinations.

47. The communication device of claim 46, wherein the mapping relationship between deflection angles and mode combinations is configured based on a purpose for maximizing a channel capacity or maximizing a channel signal to interference plus noise ratio (SINR).

48. The communication device of any one of claims 39 to 40 and 41 to 47, wherein a formula of a first mode combination among the K+1 OAM mode combinations is represented as:

$$L = L' - \lfloor L'/(N/2) \rfloor * N$$

, where L' = 0,1,..., N - 1; and
a formula of a $k^{th}$ mode combination among the K + 1 OAM mode combinations is represented as:

$$L = L' - \lfloor L'/(N/2) \rfloor * N$$

, where L' = I + 2k * n + S;

$$n = 0,1,2 ..., \left\lfloor \frac{N-1}{2k} \right\rfloor$$

I = 0/ .../2k - 1; ; S = 0,1 ... k - 1; k = 1,2,3, ..., K;
where L represents a mode value of the

$$L \in \left[ -\frac{N}{2}, \frac{N}{2} \right)$$

mode combination, , L' represents a transition value for calculating the mode value L, n and S are related to a number of L' modes, I E [0, N), I represents an initial mode for OAM selection, and N represents the number of array elements emitting the UCA.

49. A communication device, comprising:

a processor; and
a memory having stored therein a computer program;
wherein the processor is configured to perform the computer program stored in the memory to enable the communication device to implement the method according to any one of claims 1 to 13.

50. A communication device, comprising:

a processor; and
a memory having stored therein a computer program;
wherein the processor is configured to perform the computer program stored in the memory to enable the communication device to implement the method according to any one of claims 14 to 24.

51. A computer readable storage medium having stored therein indications that, when executed, cause the method according to any one of claims 1 to 13 to be implemented.

52. A computer readable storage medium having stored therein indications that, when executed, cause the method according to any one of claims 14 to 24 to be implemented.

FIG. 1

FIG. 2

transmitting indication information to indicate a transmitting end to
determine a transmitting mode ⎯⎯ 301

FIG. 3

determining a target OAM mode combination from preset K+1 OAM mode combinations — 401

transmitting the indication information to indicate to determine the transmitting mode of the transmitting end based on the target OAM mode combination — 402

FIG. 4

determining channel information about a wireless channel between the receiving end and the transmitting end — 501

determining the target OAM mode combination from the preset K+1 OAM mode combinations based on the channel information — 502

transmitting the indication information to indicate to determine the transmitting mode of the transmitting end based on the target OAM mode combination — 503

FIG. 5

determining a first deflection angle between the receiving end and the transmitting end — 601

determining the target OAM mode combination from the preset K+1 OAM mode combinations based on the first deflection angle — 602

transmitting the indication information to indicate to determine the transmitting mode of the transmitting end based on the target OAM mode combination — 603

FIG. 6

```
┌─────────────────────────────────────────────────────────────┐
│                                                              │
│              receiving indication information                │ ⌒ 701
│                                                              │
└─────────────────────────────────────────────────────────────┘
                              │
                              ▼
┌─────────────────────────────────────────────────────────────┐
│  determining a transmitting mode of the transmitting end     │
│  based on the                                                │ ⌒ 702
│              indication information                          │
└─────────────────────────────────────────────────────────────┘
```

FIG. 7

```
┌─────────────────────────────────────────┐
│        communication device              │ ⌒ 80
│                                          │
│   ┌───────────────────────┐              │
│   │  transceiving module  │ ⌒ 802        │
│   └───────────────────────┘              │
│                                          │
│   ┌───────────────────────┐              │
│   │   processing module   │ ⌒ 801        │
│   └───────────────────────┘              │
│                                          │
└─────────────────────────────────────────┘
```

FIG. 8

```
┌──────────────────────────────────────────────────────┐
│             communication device                     │
│                                              ⌒ 90     │
│  ┌──────────────────┐                                │
│  │ interface circuit│ ⌒ 907    ┌──────────────┐      │
│  └──────────────────┘          │              │ ⌒ 901 │
│                                │  processor   │      │
│  ┌──────────────────┐          └──────────────┘      │
│  │     antenna      │ ⌒ 906                           │
│  └──────────────────┘          ┌ ─ ─ ─ ─ ─ ─ ─ ┐ ⌒ 902│
│                                    memory            │
│  ┌──────────────────┐          │                 │   │
│  │   transceiver    │ ⌒ 905       ┌────────────┐     │
│  └──────────────────┘          │ │ computer   │ │ ⌒ 904│
│                                  │ program    │      │
│                                │ └────────────┘ │    │
│                                 ─ ─ ─ ─ ─ ─ ─ ─     │
└──────────────────────────────────────────────────────┘
```

FIG. 9

## INTERNATIONAL SEARCH REPORT

| International application No. |
| --- |
| **PCT/CN2021/113906** |

**A. CLASSIFICATION OF SUBJECT MATTER**

H04B 7/06(2006.01)i; H04W 28/06(2009.01)i; H04W 24/02(2009.01)i

According to International Patent Classification (IPC) or to both national classification and IPC

**B. FIELDS SEARCHED**

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

CNABS; CNTXT; CNKI; VCN; ENTXTC; VEN; USTXT; WOTXT; EPTXT; ENTXT; 3GPP: 轨道角动量, 模态, 模式, 偏转角, 角度, 索引, 过渡值, 均匀圆阵列, 信噪比, OAM, orbital angular momentum, mode, angle, index, UCA, uniform circular array, SINR

**C. DOCUMENTS CONSIDERED TO BE RELEVANT**

| Category* | Citation of document, with indication, where appropriate, of the relevant passages | Relevant to claim No. |
| --- | --- | --- |
| X | CN 112803975 A (HUAWEI TECHNOLOGIES CO., LTD.) 14 May 2021 (2021-05-14) description, paragraphs [0050]-[0272], and figures 4 and 10-11 | 1-52 |
| X | CN 112996054 A (HUAWEI TECHNOLOGIES CO., LTD.) 18 June 2021 (2021-06-18) description, paragraphs [0094]-[0258], and figures 9-19 | 1-52 |
| A | CN 112887989 A (HUAWEI TECHNOLOGIES CO., LTD.) 01 June 2021 (2021-06-01) entire document | 1-52 |
| A | CN 112260720 A (XIDIAN UNIVERSITY) 22 January 2021 (2021-01-22) entire document | 1-52 |
| A | US 2015188660 A1 (ELECTRONICS AND TELECOMMUNICATIONS RESEARCH INSTITUTE) 02 July 2015 (2015-07-02) entire document | 1-52 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **31 March 2022** | **25 April 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/113906**

| Patent document cited in search report | | | Publication date (day/month/year) | Patent family member(s) | | | Publication date (day/month/year) |
|---|---|---|---|---|---|---|---|
| CN | 112803975 | A | 14 May 2021 | WO | 2021093591 | A1 | 20 May 2021 |
| CN | 112996054 | A | 18 June 2021 | WO | 2021120926 | A1 | 24 June 2021 |
| CN | 112887989 | A | 01 June 2021 | WO | 2021104518 | A1 | 03 June 2021 |
| CN | 112260720 | A | 22 January 2021 | CN | 112260720 | B | 11 January 2022 |
| US | 2015188660 | A1 | 02 July 2015 | KR | 20150079039 | A | 08 July 2015 |

Form PCT/ISA/210 (patent family annex) (January 2015)